# EUROPEAN PATENT SPECIFICATION

(11) **EP 2 113 412 B1**
(45) Date of publication and mention of the grant of the patent: **23.03.2011**
(21) Application number: 09158931.7
(22) Date of filing: 28.04.2009
(51) Int. Cl.: B60P 1/64, B60P 1/16

(54) **Telescopic actuator for loading and unloading a cargo-carrier on a vehicle**
Teleskopzylinder zum Laden und Entladen eines Ladungsträgers an einem Fahrzeug
Vérin télescopique pour le chargement ou le déchargement d'un porte-charges sur un véhicule

(30) Priority: 30.04.2008 SE 0800982
(43) Date of publication of application: 04.11.2009
(73) Proprietor: Bildsberg Investment Group BIG AB, 523 37 Ulricehamn (SE)
(72) Inventor: Håkansson, Göte, SE-523 37, ULRICEHAMN (SE)
(74) Representative: Mossmark, Anders Lennart

(56) References cited:
- EP-A- 1 473 466
- EP-A- 1 702 792
- DE-A1-102004 063 362
- GB-A- 959 304
- US-A- 2 390 702

## Description

### TECHNICAL FIELD

The present invention relates to a force arrangement for a trailer intended for loading and unloading of cargo carriers, according to the preamble to subsequent claim 1.

### BACKGROUND ART

The invention relates to a kind of loading vehicles equipped with a so called cargo exchanger, which can be used for placing a cargo carrier on a location where they can be loaded, whereby loading vehicles and trailers more efficiently can be used for transportation in comparison to fixed cargo carriers. The same loading vehicle or trailer vehicle can in this way be used for several different kinds of cargo carriers, such as open loading beds, closed cargo containers, for instance silo containers. There has also been produced an arrangement usable for both changing of loads as well as tipping of goods, see SE-C2 508727. In known combination solutions however the power arrangement is to its length adapted to what is required for changing of loads, which means that when tipping, the tipping angle will be limited with an in many cases incomplete emptying of the load as a consequence. As a power arrangement a double-acting hydraulic cylinder is normally used and it is desirable that it could be constructed with an extra extendable part. This extra part however will through its smaller area be exerted to a considerably higher stress than the rest of the power arrangement, leading to a great risk that the power arrangement will break down while under great load. The extra extendable part will receive its greatest stress on the return side during unexpected loads, especially during handling on uneven surfaces, when the cargo carrier is being pulled up from ground level. The extra extendable part will then have the function of a pressure intensifier where the pressure will be inversely proportional to the area between the first extendable part and the extra extendable part.

EP 1702 792A discloses a power arrangment according to the preamble of claim 1

### SUMMARY OF THE INVENTION

The purpose of the present invention is to conceive a cargo exchanger that also may be optimised for tipping of goods.

Said invention is achieved by means of an arrangement according to the present invention, whose features will be made clear from the subsequent claim 1.

### BRIEF DESCRIPTION OF THE DRAWINGS

The invention shall below be closer described with an example of an embodiment referring to attached drawings, in which
fig. 1 shows a side view of a cargo exchanger during the time of changing and equipped with the power arrangement according to the invention and with the loading frame reversely folded in a position to retrieve/leave a lying cargo carrier on the ground,
fig. 2 shows a view facing the rear,
fig. 3 shows a cargo exchanger during the time of tipping with the power arrangement according to the invention not fully extended and in the tipping mode a cargo exchanger will be positioned in without the invention with cargo carrier held in place,
fig. 4 shows the cargo exchanger with the power arrangement fully extended to optimal tipping position according to the invention,
fig. 5 shows the power arrangement according to the invention in a fully contracted position,
fig. 6 shows the power arrangement in an extended position with its main cylinder extended, but with its extension part locked in a contracted position,
fig. 7 shows the power arrangement in a fully extended position with the extension part extended,
fig. 8 shows an enlarged cross section along the line VIII-VIII in fig. 5 showing a locking arrangement as part of the power arrangement in a locked position,
fig. 9 is a cross section perpendicular to the cross section of fig. 8,
fig. 10 is a view of the locking arrangement,
fig. 11 is an enlarged cross section along the line XI-XI in fig. 7, showing the locking arrangement in a releasing position, and
fig. 12 is a cross section perpendicular to the cross section in fig. 11.

### PREFERRED EMBODIMENT

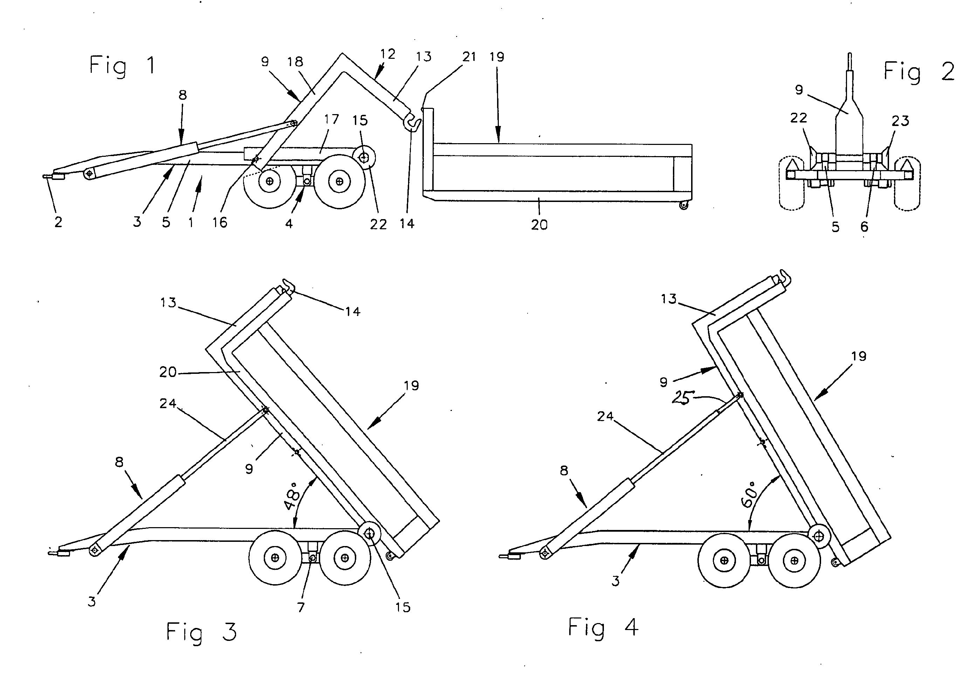

The arrangement according to the invention is in the shown example according to fig. 1-4 constructed on a trailer 1, which via a trailer coupling 2 can be attached to a towing vehicle, for instance a truck or tractor, but the device can just as well be adapted to a truck chassis. The trailer is constructed of a carrying frame 3 that rests on a wheel suspension, in the example shown in the shape of a two axis bogie suspension 4. The carrying frame comprises two in the length direction of the trailer extending frame side members 5, 6, that are mutually joined in the front at the trailer coupling and in the rear via the wheel suspension's main axle 7. Along the rear a rear axle tie rod can be arranged between the frame side members.

The arrangement according to the invention shows a loading frame 9, which in the front changes into a carrier unit 12, which comprises an erect arm 13, which in its outer end shows a connection organ 14, in the shown example in the form of a hook. The carrier unit 12 normally extends in the cross-direction of the loading frame 9.

The loading frame is pivotally connected with the carrying frame along a fulcrum or a joint which is represented by a turning axle 15, which is located in the rear of the trailer. The pivoting motion of the loading frame 9 is accomplished by a linear power arrangement 8. The loading frame 9 can in a preferable design be telescopically extendable such that the carrier unit 12 can take a great number of positions between a maximally extended position of the loading frame, where the carrier unit is located at a maximal distance from its leading bogie 15, and a maximally contracted position for the loading frame, for instance when the loading frame additionally is maximally pivoted to a loading/unloading position for a lying cargo unit on the ground. The high-grade variation of length of the loading frame 9 is made possible through that the loading frame is divided into two or three telescopic units in the shape of in each other displaceable frame parts in the shape of beams, where a rear part is directly connected with the turning axle 15 and displaceable relative to the forward part which is telescopically displaceable relative to the rear part and which in turn supports the carrier unit, the carrier unit being fixated at the forward telescopic part and placed cross-directionally to the loading frame's main lengthwise direction, in the example shown perpendicular to this this direction. The change of length of the loading frame and thereby the movement of the carrier unit 12 is accomplished by means of a not shown power arrangement, suitably in the shape of an internally mounted hydraulic cylinder, that can comprise three telescopic parts.

Alternatively or in combination with the loading frame's 9 telescopic function, as in the example, the loading frame is divided in two via a middle joint 16 relatively flexible parts 17, 18. Through this the rear part 17 can remain on the carrying frame 3, while the forward part 18 by means of the power arrangement 8 can pivot around the middle joint 16 for loading/unloading of separate cargo carriers, for instance a platform body 19, that is positioned behind the trailer 1, for instance on the ground. When using a cargo carrier such as a tipper body the whole loading frame 9 is used, such that it as a unit is pivoted around the turning axle 15, at the same time as the platform body is kept in place attached to the loading frame and follows the loading frame's movements, as shown in fig. 3 and 4.

In order for the different cargo carriers to be able to be exchanged and tipped they are in one respect uniformly designed, namely with a unit frame 20, which in its design and dimensions are adapted to certain conditions of the loading frame 9. The unit frame 20 can be of a standard type, usually comprising two longitudinal mutually parallel frame side members that in the front changes into cross bars with a connection organ 21 in its outer end, which is intended to be connected to the connection organ 14 of the loading frame.

The connection organ 21 of the unit frame can simply be comprised of a loop or a rod so arranged that it easily can be gripped by the loading frame's hook like connection organ 14. Furthermore the unit frame 20 is arranged such that it is movable in not shown guides so that it obtains a stabile steering during both exchange and transportation. In addition the loading frame 9 is provided with locking organs which interact with corresponding organs on the unit frame 20 for locking of these during transport and also tipping.

The unit frame 20 supports some kind of cargo carrier for the cargo in question, which can consist of a simple loading platform with flaps or a completely sealed container for bulk goods or liquid goods, for instance a silo container. The closed container can also be a container for piece goods. The unit frame 20 further exhibits at its rear end wheels or rolls, which facilitates the movement of the unit frame 20 relative the loading vehicle's supporting surfaces and also against the ground during exchange.

Of the different loading situations it is clear that the arrangement according to the arrangement is especially versatile and flexible for changing of cargo of lying and standing units of cargo as well as for tipping. During changing of cargo or loading of a unit of cargo the loading frame pivots in a rearward direction by means of the associated power arrangement 8, which is comprised of one or more hydraulic cylinders arranged parallel to each other and which is in one of its ends fastened to the bearing frame 3 and in its other end fastened to the loading frames forward part 18. The exchange trailer is positioned in such a way that the carrier unit 12 comes to a position in order to with the connection organ 14 grip onto the connection unit 21 of the cargo unit. By means of contraction of the hydraulic cylinder 8, the turning axle pivots so that the lying cargo carrier 19 is lifted forward over the rolls 22, 23 until the cargo carrier 19 is in place on the loading frame with said frame folded against the carrying frame 3.

During tipping of cargo carrier 19 rearward the carg carrier is open in the back or exhibits one through bulk goods openable rear flap. Further it is attended to that the cargo carrier in the example shown is firmly connected to the loading frame 9, which as a unit pivots around its turning axle 15. Fig. 3 demonstrates with an example the tipping angle 48 degrees when the piston rod 24 of the hydraulic cylinder 8 is fully extended, which is not an optimal tipping position. Fig. 4 shows another pivoted tipping position, which according to the invention is achieved by means of that an extension part 25 in the shape of a second piston rod is activated and in its maximally extended position accomplishes a greater tipping angle of for instance 60 degrees and secures a complete emptying of the load, which is of great importance for cargo materials such as clay which is easily smeared onto the bottom of the loading platform.

The power arrangement 8 is namely designed among other things to its piston stroke and fastened for an optimal basic movement for the exchange function which is determined by the end position of the connection organ 14 during loading/unloading of a cargo container. At the end position the hydraulic cylinder's main piston 24 preferably is maximally extended and a suitable piston stroke is limited by the demand of a smallest angle between the hydraulic cylinder and the loading frame 9 in order to accomplish a loading motion during lifting of a platform body with cargo and that the power arrangement is able to fit in a folded position. For the tipping motion the hydraulic cylinder can thus be extended further by means of the extension part 25, which shall be described in detail below.

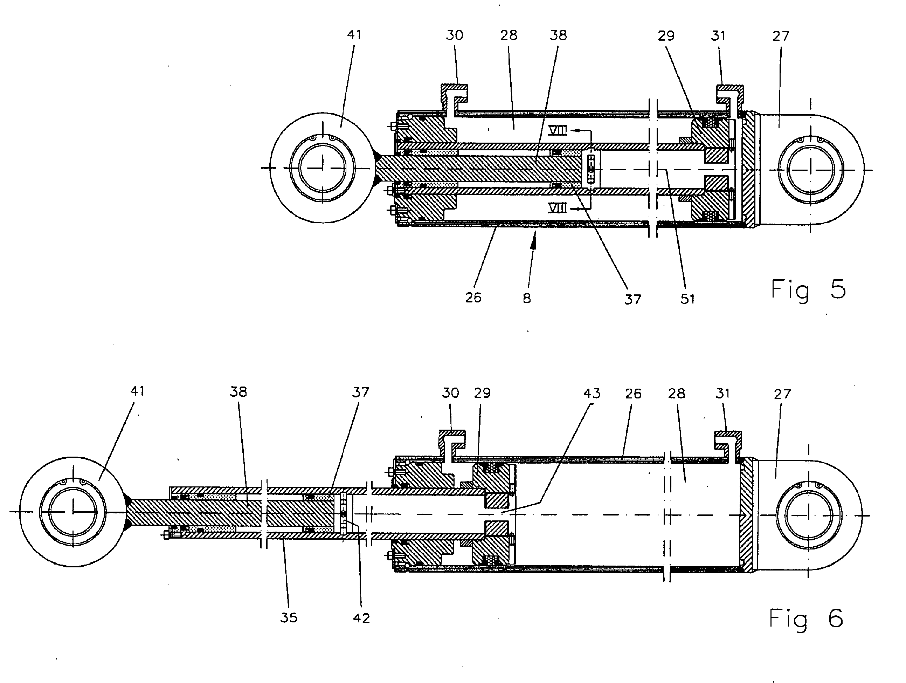

The construction of the linear hydraulic power arrangement 8 shall now be described closer with reference to fig. 5, 6 and 7. It is constructed of a main cylinder 26 with a fastening part 27 in one end for flexible fastening in for instance the carrying frame 3. The main cylinder exhibits a cylinder chamber 28, in which a main piston 29 is movable under influence of a pressure difference between both sides of the piston, which is regulated through a connection to a hydraulic fluid pressure system via hydraulic connections 30, 31 in the cylinder chamber's both ends 32, 33. Through a sealing passage in one of the main cylinder's 26 gables 34 a main piston rod 35 extends, said piston rod being fastened to the main cylinder 29 and adjusted to move along with the piston's movement front to rear and reversely. The piston rod is tube-shaped and in turn forms a second cylinder with a second cylinder chamber 36, which extends through the piston and is open to the main cylinder 26. This second cylinder chamber forms the cylinder tube for a second piston 37 with a second piston rod 38, which protrudes through a sealing inlet in the second cylinders outer gable 39. The second piston rod 38 exhibits in its outer end 40 a fastening part 41 for flexible fastening to the loading frame 9, which is shown in fig. 1-4. With break lines over the cylinder parts and piston rods is implied that the real components are in fact considerably longer than what is shown in fig. 5, 6 and 7. For examples of actual proportions reference is made to fig. 1-4.

According to the invention the power arrangement 8 is designed with a locking arrangement 42 for respectively locking and releasing of the second piston rod 38 in a fixed position relative to the main piston rod 35. The locking arrangement 42 is pressure controlled so that it is in a locked position at a hydraulic pressure below a certain value that arises during the moment of exchange and also during a large part of the tipping phase and is activated for release at a value greater than this, namely when the main piston rod 35 reaches it fully extended position. In the locked position the extension part 25, which is the second piston rod 38, is thus locked in a contracted position by means of that the adjoining piston 29 is locked by means of the locking arrangement 42.

The locking arrangement 42, as is made clear from the shown example, is placed beside the second piston 37 on the side that is turned towards the hydraulic pressure side, more exactly turned towards the second cylinder chamber's 36 opening 43 towards the main cylinder's 26 cylinder chamber 28.

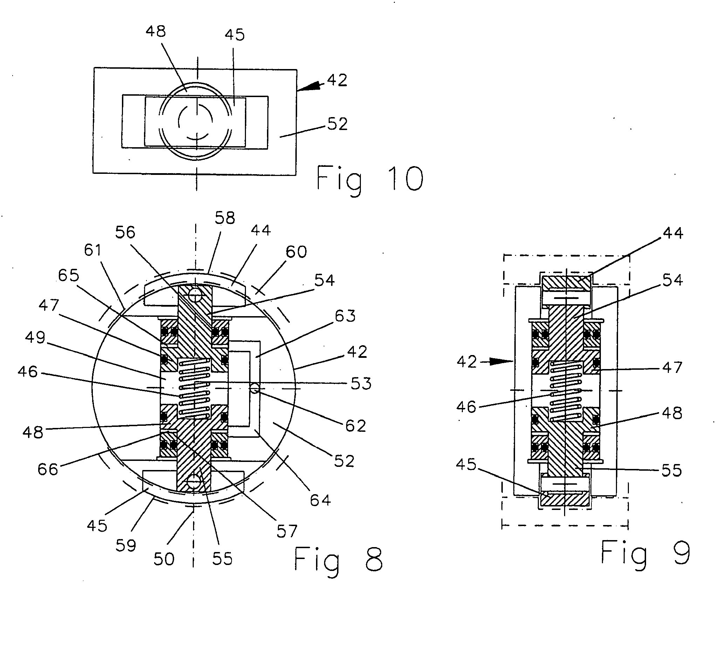

The locking arrangement 42 is, as is best made clear from fig. 8-12, mainly constructed from a number of locking organs 44, 45 which under the influence of a force are resettable between locking position in engagement with a fixed part of the main piston rod 35 and a releasing position, allowing movement of the extension part 25 relative the adjoining cylinder, i.e. the main piston rod. The action of the force is chosen such that, at a relatively speaking lower hydraulic pressure a radially outward acting force keep them in their locking position and at a hydraulic pressure exceeding a certain value the locking organs are radially pushed inwards towards their releasing position.

This action of force on the locking organs 44, 45 towards the locked position is accomplished in the shown example by a spring force from a compression spring 46 in the shape of a helical spring, which is fastened between the locking organs, more precisely between pistons 47, 48, which are movable in a cross directed cylinder chamber 49 with a central axis 50 extending perpendicular against the power arrangement's 8 lengthwise axis 51. Purely mechanical the locking arrangement 42 in the example is constructed as a cylindrical house 52 with a central axis 53, which is coaxial with the power arrangement's lengthwise axis 51. Both of the pistons 47, 48 support a short piston rod each, each extending through a diametrically opposite passage 56, 57 in the house 52, each supporting a locking shoe forming the locking organs 44, 45. These have in the example the shape of a circular arch, for instance a cylinder jacket shaped outer edge 58, 59 arranged to insert into a ring shaped track 60, suitably circular in shape surrounding the inside of the second cylinder room 36 jacket wall 61 with a height, looked at in the direction of the lengthwise axis 51, that somewhat exceeds the cain boxes' width in the same direction. Through this a shape locking dimensioned to absorb large forces through the relatively high hydraulic pressures that may occur is obtained.

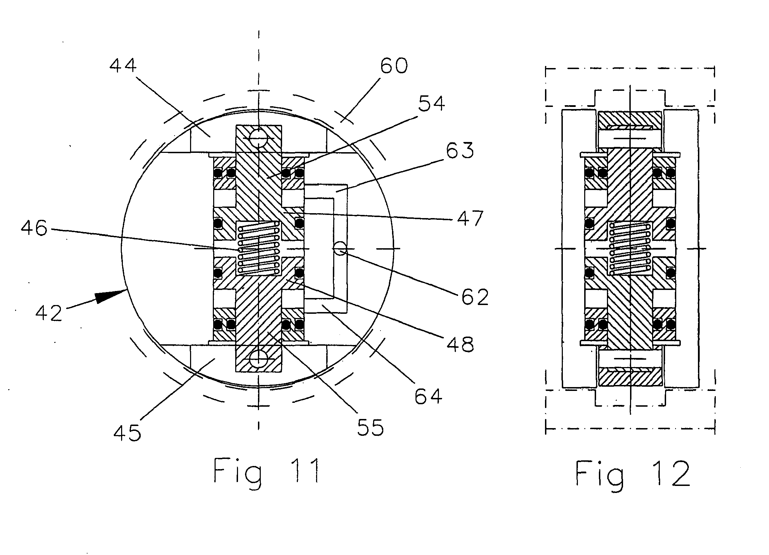

In order to create a force action in the opposite direction for resetting to a releasing position hydraulic fluid channels 62, 63, 64 are arranged which maintains a communication of hydraulic fluid between the second cylinder chamber 36 for the piston 37 and the respective cylinder chamber part 65, 66 on the outside of each piston 47, 48 in the latitudinally directed cylinder chamber 49. The channels comprise a shared channel 62 through part of, for instance half the house 52, which discharges on the outside of the house against the cylinder chamber 36, further two branching channels 63, 64 that lead to the both outsides of the pistons 65, 66. Through the fact that the cain boxes all the time are exerted to the spring force in a direction radially outwards, it must be overcome for a movement in the opposite direction. This arises when the hydraulic pressure in the cylinder chamber 36 and therewith in the cylinder chamber parts 65, 66 on the outside of the pistons 47, 48 reaches such a level that the pressure force on the pistons' outside exceeds the spring force and pushes the locking shoes radially inwards to a releasing position according to fig. 11 and 12. Accordingly, the same hydraulic pressure can push the piston 37 and adjoining second piston rod 40 outwards, i.e. the extension part extends. Reversely the locking shoes can at a pressure less than the activating pressure for releasing move outwards towards the jacket wall of the cylinder chamber, whereupon a contraction of the extension part 25 under the influence of outer contracting forces may occur until the piston rod 40 is contracted, when the locking shoes reaches a position just in front of the locking notch 58, i.e. when the right position axially for locking is attained.

With reference to each of the figures the power arrangement according to the invention functions in the following way. When the loading frame 9 is completely contracted against the bearing frame 3 of trailer 1, the power arrangement 8 is in its completely contracted position, as shown in fig. 5. At this both the main piston rod 35 and the extension part 25 is in their maximally contracted position in their adjoining cylinder. When a loading work is to be carried out, for instance changing of cargo containers 19, such as loading and unloading of a changing loading platform according to fig. 1 hydraulic fluid is fed under pressure via the connection, whereupon the main piston 29 and adjoining piston rod 35 are pushed outwards to a desired extent. This is controlled through regulation of the hydraulic flow in an in itself conventional way, such that the loading frame is folded backwards to the intended angle to a suitable height of the connection organ 14 at the loop 21 of the cargo carrier, for instance during the pick up of a changing loading platform on the ground. In the case of just a folded loading frame the position of the loop longitudinally and also laterally by positioning the trailer 1. By aid of a mechanical stop bolt it is seen to that the loading frame 9 is stopped in its rearward folded end position. In this end position a pressure controlled bypass valve in the hydraulic system is activated, which during continued pumping of hydraulic fluid returns the fluid to the return side of the hydraulic system. Even if the locking arrangement 42 has been reset to a releasing position by the hydraulic pressure, the extending motion of the extension part 25 is limited by the mechanical stop bolt. Reversely the power arrangement 8 is contracted by inflow of hydraulic fluid under pressure via the second connection in such a way that over pressure is created on the second side of the piston 29, resulting in that the piston and the piston rod 35 are retracted into the main cylinder 26. These movements take place under a controlled hydraulic pressure level, which does not influence the extension part 25 which is thereby reset and is positioned in its locked position during the contracting motion.

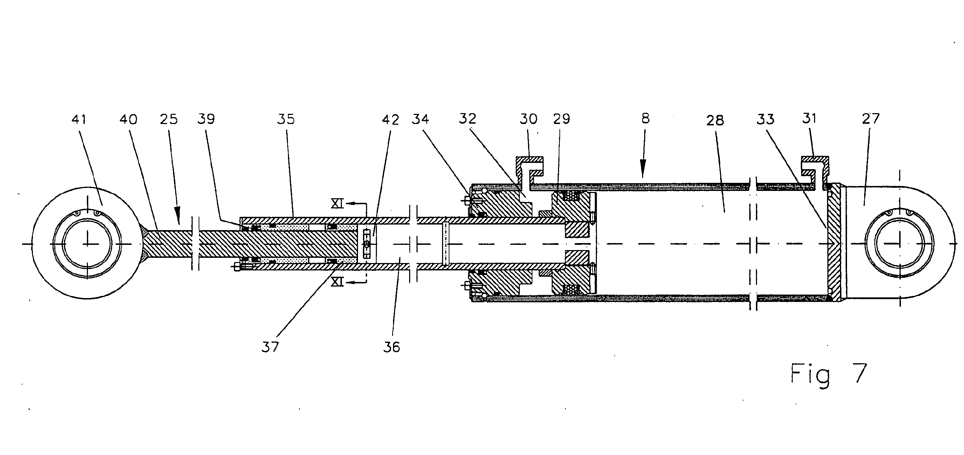

Similarly, the power arrangement 8 is expanded hydraulically while tipping during the first greater part of the tipping motion shown in fig. 3, i.e. the main piston rod 35 is expanded first to the position shown in fig. 6. When this position has been reached and an increased tipping angle is desired, the hydraulic system is allowed to continue pumping of hydraulic fluid resulting in an increase of pressure and an adjustment of the locked locking arrangement 42 in the above described way. The locking arrangement hereby is changed into a releasing position, at the same time as the piston 37 and adjoining piston rod 40 is pressed by the hydraulic fluid outwards to desired position and maximally to the position shown in fig. 4 and 7. It is understood from fig. 4 that the load from the loading frame 9 and the cargo container 19 is reduced with greater tipping angle thereby reducing the risk for overloading of the system through that the final step, i.e. the extension part 25 is kept locked during the part of the motion that is heaviest.

The invention is not limited to the example described above and shown in the drawings but can be varied within the range of the subsequent patent claims. For instance is it possible to control the locking arrangement with a separate hydraulic line connected to the shared channel 62, which therefore is not in communication with the cylinder chamber 36. The locking arrangement can alternatively be constructed with double acting hydraulics for an active change between a locking position and a releasing position instead of the pressure spring.

## Claims

1. Power arrangement (8) for a trailer for loading and unloading of cargo carrier (19), comprising a loading frame (9) that in one end is jointly connected to a bearing frame (3), where the power arrangement is placed between the bearing frame and the loading frame in order to change the loading frame between different angular positions relative to the carrying frame by means of pivoting the loading frame between a folded position, in which the loading frame extends along the bearing frame and a maximally rearward facing position, where the loading frame in its other end is supplied with a carrier unit (12) with at least one connection organ (14) for releasable connection with the cargo unit (19), where the power arrangement comprises a hydraulic cylinder (26) with one in the cylinder movable, hydraulically driven piston (29) and piston rod (35), whereby the cargo carriers by means of the power arrangement can be put away and left behind the trailer respectively retrieved and loaded onto the trailer alternatively be tipped rearward while the cargo carrier is kept in place, wherein the power arrangement exhibits an extension part (25) by way of that the piston rod (35) forms a second cylinder (40) and that a locking arrangement (42) is arranged to keep the second piston and piston rod in place as long as the first piston (29) and piston rod (35) is under extension and that thereafter be reset to a releasing position, allowing extension of the extension part, wherein the locking arrangement (42) is controlled by the hydraulic fluid pressure so that it is reset to a releasing position when the pressure exceeds a certain value, whereby the extension part (25) is set free to extend, and
**characterized in that** the locking arrangement (42) is arranged to keep the extension part (25) locked in a retracted position by means of shape locking against a locking position (60) in the jacket wall (61) of the second cylinder.

2. Arrangement according to claim 1, **characterized in that** the locking arrangement (42) is firmly placed on the second piston (37).

3. Arrangement according to claim 2, **characterized in that** the locking arrangement (42) exhibits one or more radially movable locking organs (44, 45) arranged so that in a locking position they are engaged with a recess (60) in the jacket wall (61).

4. Arrangement according to claim 3, **characterized in that** the locking organs (44, 45) is pre-tensioned with a spring force directed towards the locking position.

5. Arrangement according to claim 3, **characterized in that** the locking organs (44, 45) are placed on separate piston rods (54, 55) that with separate pistons (65, 66) are movable in a transversely positioned cylinder tube (49) in the locking arrangement and arranged to by means of hydraulic pressure be reset to releasing position.

6. Arrangement according to claim 5, **characterized in that** a compression spring (46) is fastened between the pistons (47, 48) being two in number.

## Patentansprüche

1. Leistungseinheit (8) für einen Anhänger zum Auf- und Abladen eines Ladungsträgers (19), mit einem Laderahmen (9), der an einem Ende mit einem tragenden Rahmen (3) gelenkig verbunden ist, wobei die Leistungseinheit zwischen dem tragenden Rahmen und dem Laderahmen angeordnet ist, um verschiedene Winkelposition des Laderahmens bezüglich des tragenden Rahmens einzustellen, indem der Laderahmen zwischen einer eingeklappten Position, in der der Laderahmen sich entlang des tragenden Rahmens erstreckt, und einer maximal nach hinten gewandten Position geschwenkt wird, wobei der Laderahmen an seinem anderen Ende eine Trägereinheit (12) aufweist, die maindestens ein Verbindungselement (14) für eine lösbare Verbindung mit dem Ladungsträger (19) aufweist, wobei die Leistungseinheit einen Hydraulikzylinder (26) mit einem im Zylinder beweglichen, hydraulisch angetriebenen Kolben (29) und einer Kolbenstange (35) aufweist, wobei die Ladungsträger mit Hilfe der Leistungseinheit hinter dem Anhänger abgestellt und zurückgelassen bzw. aufgenommen und auf den Anhänger geladen werden können und alternativ nach hinten abgekippt werden kann, während der Ladungsträger in Position gehalten wird, wobei die Leistungseinheit ein ausfahrbares Teil (25) aufweist, das in Kombination mit der Kolbenstange (35) einen zweiten Zylinder (40) bildet, und wobei eine Verriegelungsanordnung (42) vorgesehen ist, die dazu geeignet ist, den zweiten Kolben und die Kolbenstange in Position zu halten, so lange der erste Kolben (29) und die Kolbenstange (35) ausgefahren sind, und anschließend auf eine Entriegelungsposition zurückgesetzt werden kann, in der das ausfahrbare Teil ausfahrbar ist,
wobei die Verriegelungsanordnung (42) durch den Hydraulikfluiddruck derart gesteuert wird, dass sie auf die Entriegelungsposition zurückgesetzt wird, wenn der Druck einen bestimmten Wert überschreitet, wodurch veranlasst wird, dass das ausfahrbare Teil (25) frei ausfahrbar ist;
**dadurch gekennzeichnet, dass**
die Verriegelungsanordnung (42) dazu geeignet ist, das ausfahrbare Teil (25) durch Formschluss gegen eine Verriegelungsposition (60) in der Mantelwand (61) des zweiten Zylinders in einer eingefahrenen Position verriegelt zu halten.

2. Einheit nach Anspruch 1, **dadurch gekennzeichnet, dass** die Verriegelungsanordnung (42) auf dem zweiten Kolben (37) stabil und fest angeordnet ist.

3. Einheit nach Anspruch 2, **dadurch gekennzeichnet, dass** die Verriegelungsanordnung (42) ein oder mehrere radial bewegliche Verriegelungselemente (44, 45) aufweist, die derart angeordnet sind, dass sie in einer Verriegelungsposition mit einer Vertiefung (60) in der Mantelwand (61) in Eingriff stehen.

4. Einheit nach Anspruch 3, **dadurch gekennzeichnet, dass** die Verriegelungselemente (44, 45) durch eine zur Verriegelungsrichtung hin gerichtete Federkraft vorgespannt sind.

5. Einheit nach Anspruch 3, **dadurch gekennzeichnet, dass** die Verriegelungselemente (44, 45) auf separaten Kolbenstangen (54, 55) angeordnet sind, die mit separaten Kolben (65, 66) in einem in Querrichtung angeordneten Zylinderrohr (49) in der Verriegelungsanordnung beweglich und dazu geeignet sind, durch einen Hydraulikdruck auf eine Entriegelungsposition zurückgestellt zu werden.

6. Einheit nach Anspruch 5, **dadurch gekennzeichnet, dass** eine Druckfeder (46) zwischen den beiden Kolben (47, 48) angeordnet ist.

## Revendications

1. Agencement de puissance (8) pour une remorque pour charger et décharger un porte-charge (19), comprenant un châssis de chargement (9) qui, au niveau d'une extrémité, est raccordé de manière conjointe à un châssis porteur (3), dans lequel l'agencement de puissance est placé entre le châssis porteur et le châssis de chargement afin de faire passer le châssis de chargement dans différentes positions angulaires par rapport au châssis de support au moyen du pivotement du châssis de chargement entre une position pliée, dans laquelle le châssis de chargement s'étend le long du châssis porteur et une position orientée au maximum vers l'arrière, dans lequel le châssis de chargement, au niveau de son autre extrémité, est équipé d'une unité de support (12) avec au moins un organe de raccordement (14) pour le raccordement amovible avec l'unité de chargement (19), dans lequel l'agencement de puissance comprend un vérin hydraulique (26) avec un ensemble de piston hydraulique (29) mobile dans le vérin et de tige de piston (35), moyennant quoi les porte-charges au moyen de l'agencement de puissance peuvent être garés et laissés derrière la remorque, respectivement récupérés et chargés sur la remorque en étant inclinés en variante vers l'arrière alors que le porte-charge est maintenu en place, dans lequel l'agencement de puissance laisse apparaître une partie d'extension (25) au moyen de laquelle la tige de piston (35) forme un deuxième vérin (40) et de sorte qu'un agencement de verrouillage (42) est agencé pour maintenir le deuxième ensemble de piston et de tige de piston en place tant que le premier ensemble de piston (29) et de tige de piston (35) est sous extension et après quoi il peut être replacé dans une position de libération permettant l'extension de la partie d'extension, dans lequel :
l'agencement de verrouillage (42) est commandé par la pression de fluide hydraulique de sorte qu'il est replacé dans une position de libération lorsque la pression dépasse une certaine valeur, moyennant quoi la partie d'extension (25) est libre de s'étendre, et
**caractérisé en ce que** l'agencement de verrouillage (42) est agencé pour maintenir la partie d'extension (25) bloquée dans une position rétractée au moyen du verrouillage de forme contre une position de verrouillage (60) dans la paroi de chemise (61) du deuxième vérin.

2. Agencement selon la revendication 1, **caractérisé en ce que** l'agencement de verrouillage (42) est fermement placé sur le deuxième piston (37).

3. Agencement selon la revendication 2, **caractérisé en ce que** l'agencement de verrouillage (42) laisse apparaître un ou plusieurs organes de verrouillage mobiles (44, 45) agencés de sorte que dans une position de verrouillage, ils sont mis en prise avec un évidemment (60) dans la paroi de chemise (61).

4. Agencement selon la revendication 3, **caractérisé en ce que** les organes de verrouillage (44, 45) sont pré-tendus avec une force de rappel dirigée vers la position de verrouillage.

5. Agencement selon la revendication 3, **caractérisé en ce que** les organes de verrouillage (44, 45) sont placés sur des tiges de piston séparées (54, 55) qui, avec les pistons séparés (65, 66), sont mobiles dans un tube de vérin (49) positionné de manière transversale dans l'agencement de verrouillage et agencés, au moyen de la pression hydraulique, pour être replacés dans la position de libération.

6. Agencement selon la revendication 5, **caractérisé en ce qu'**un ressort de compression (46) est fixé entre les pistons (47, 48) qui sont au nombre de deux.
